# EUROPÄISCHE PATENTSCHRIFT

(11) **EP 2 687 326 B1**
(45) Veröffentlichungstag und Bekanntmachung des Hinweises auf die Patenterteilung: **04.03.2015**
(21) Anmeldenummer: 13003622.1
(22) Anmeldetag: 18.07.2013
(51) Int. Cl.: B23Q 1/70, B23Q 11/08

(54) **Motorisch angetriebene Werkzeugmaschineneinheit mit einem Wälzlager**
Motorised machine tool unit with a roller bearing
Unité de machine-outil motorisée dotée d'un palier à roulement

(30) Priorität: 18.07.2012 DE 102012014145
(43) Veröffentlichungstag der Anmeldung: 22.01.2014
(73) Patentinhaber: Franz Kessler GmbH, 88422 Bad Buchau (DE)
(72) Erfinder: Van Sprang, Joachim, 88213 Ravensburg (DE); Mayer, Anton, 42697 Solingen (DE)
(74) Vertreter: Otten, Roth, Dobler & Partner

(56) Entgegenhaltungen:
- EP-A2- 0 417 549
- DE-A1- 4 015 241
- DE-A1- 19 817 178
- GB-A- 2 266 937
- US-A- 5 722 779

## Beschreibung

Die Erfindung betrifft eine motorisch angetriebene Werkzeugmaschineneinheit wie ein Mehrachsendrehkopf, eine Motorspindel, einen Drehtisch oder dergleichen nach dem Oberbegriff des Anspruchs 1.

Eine solche Werkzeugmaschineneinheit ist zum Bespiel aus dem Patentdokument US-A-5,722,779 bekannt.

### Stand der Technik

Bei motorisch angetriebenen Werkzeugmaschineneinheiten wie Spindeln, insbesondere bei Motorspindeln, oder Drehtischen oder Mehrachsendrehköpfen etc. gibt es im Grundsatz zwei verschiedene Lageranordnungen, wie die Rotoreinheit mit ihrer Rotorwelle in/an der Statoreinheit gelagert wird. Dies kann allerdings je nach Ausführung im Detail etwas variieren.

Darüber hinaus ist in den letzten Jahren unter anderem auf Grund der zunehmenden Qualität der Spanwerkzeuge oder dergleichen auch eine Zunahme der Anforderungen an die Zerspannung und insbesondere an Parametern wie Vorschub, Winkelgeschwindigkeit festzustellen, wodurch zum Teil erhebliche Kräfte auf die Werkzeugmaschineneinheiten bzw. deren Lager einwirken. So sind vor allem die vorderen Lager hohen Belastungen und einem hohen Verschleiß ausgesetzt. Dies führt dazu, dass z.B. bei Motorspindeln gerade diese vorderen Lager die kritischen Elemente sind bzw. die höchsten Ausfallraten aufweisen.

So werden an die vordere Lagerung besondere Anforderungen gestellt. Auch sind die vorderen Lager durch eindringenden Schmutz gefährdet, der durch den Zwischenbereich zwischen bewegten Teilen der Rotoreinheit und den stehenden Teilen der Statoreinheit sich bis zum Lager bzw. zur Lagerung vordringen kann. Eindringender Schmutz, insb. feine Partikel führen bei schnell drehenden Spindeln zu einer Beeinträchtigung und ggf. zur Zerstörung des Lagers bzw. der Lagerstelle.

### Aufgabe und Vorteile der Erfindung

Aufgabe der Erfindung ist es demgegenüber, eine Werkzeugmaschine bzw. eine motorisch angetriebene Werkzeugmaschineneinheit vorzuschlagen, die die zunehmenden Anforderungen an moderne Werkzeugmaschinen bzw. Werkzeugmaschineneinheiten besser erfüllt bzw. wobei die vordere Lagerung besser vor Schmutzeintritt geschützt ist.

Diese Aufgabe wird, ausgehend von einer Werkzeugmaschineneinheit der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Werkzeugmaschineneinheit dadurch aus, dass wenigstens eine Fluideinheit vorgesehen ist, die ein mit Druck beaufschlagbares Fluid an wenigstens einer Einbringstelle in den Spalt des Endbereiches einbringt. Mit Hilfe einer derartigen Fluideinheit, die ein druckbeaufschlagtes Fluid in den Spalt des Endbereichs einbringt, kann der Betrieb des vorderen Wälzlagers bzw. der Wälzlagereinheit deutlich verbessert werden. Das erfindungsgemäß eingebrachte Fluid kann nämlich unterschiedliche, vorteilhafte Funktionen erfüllen.

Einerseits kann das Fluid, insbesondere eine Flüssigkeit, aber auch ein Gas wie Luft oder dergleichen, Wärme aufnehmen, insbesondere Abwärme des vorderen Wälzlagers bzw. der Wälzlagereinheit, und abtransportieren. Somit kann in vorteilhafter Weise eine direkte Kühlung des vorderen Lagers bzw. der Wälzlagereinheit realisiert werden, das heißt ein Kontakt des als Kühlfluid ausgebildeten eingebrachten Fluids. Hierbei wird zudem in vorteilhafter Weise der Spalt und somit der Endbereich im Bereich der Werkzeug- und/oder Werkstückaufnahme gekühlt.

Durch die vorteilhafte Kühlung durch das mit Druck beaufschlagte Fluid gemäß der Erfindung werden thermisch bedingte Beeinträchtigungen bzw. Längenänderungen und/oder Verspannungen, zum Beispiel der Wälzlagereinheit, verringert oder sogar vollständig unterbunden. Hierdurch wird eine höhere Maßhaltigkeit der Werkzeug- und/oder Werkstückaufnahme realisierbar.

Andererseits führt das Einbringen des erfindungsgemäßen Fluids in den Spalt des Endbereiches dazu, dass die Wälzlagereinheit vor Verschmutzung besser geschützt ist. Das heißt, dass durch den Spalt eindringender Schmutz in vorteilhafter Weise gehindert bzw. zurückgehalten wird, so dass dieser nicht bis zum mechanischen, vorderen Wälzlager bzw. der Wälzlagereinheit durch den Spalt eindringen und die Wälzlagereinheit bzw. die Wälzkörper wie Kugeln oder Zylinder oder dergleichen beschädigen kann. Folglich wird die Lebensdauer bzw. Haltbarkeit der Wälzlagereinheit bzw. des vorderen Wälzlagers wesentlich besser bzw. verlängert. Das durch den Spalt strömende druckbeaufschlagte Fluid verhindert somit in vorteilhafter Weise eine Beeinträchtigung bzw. Zerstörung des vorderen Lagers bzw. der Wälzlagereinheit, was gerade bei modernen Spindeln wie z.B. bei schnell drehenden Motorspindeln von entscheidender Bedeutung ist.

Gemäß der Erfindung wird somit die bislang problematischste Schwachstelle bei schnell drehenden Motorspindeln oder dergleichen wirkungsvoll beseitigt, sodass vor allem über den gesamten Lebenszyklus betracht die Haltbarkeit bzw. die Wirtschaftlichkeit einer Werkzeugmaschineneinheit wie einer Motorspindel, eines Drehtisches, eines Mehrachsendrehkopfes oder dergleichen deutlich verbessert wird.

Vorteilhafterweise ist die Fluideinheit als Schutzvorrichtung zum Schutz der Wälzlagereinheit vor Verschmutzung ausgebildet. Dementsprechend ist die Fluideinheit als Verschmutzungs-Schutzvorrichtung ausgebildet. Es hat sich in ersten Versuchen gezeigt, dass diese Schutzfunktion bzw. die Verschmutzungsverhinderungsfunktion gerade beim Einsatz von atmosphärischer Luft als Fluid der Fluideinheit von größerer Bedeutung ist als die Kühlfunktion, die durch die kühlende Wirkung der strömenden Luft realisierbar ist. Die Kühlung der erfindungsgemäßen Werkzeugmaschineneinheit kann nämlich ggf. auch separat durch eine vorteilhafte Kühleinheit realisiert werden. Hierbei kann beispielsweise die Kühleinheit die gesamte Werkzeugmaschineneinheit kühlen und/oder im Bereich des elektromagnetischen Antriebssystems angeordnet werden.

In einer besonderen Weiterbildung der Erfindung kann eine separate Kühlvorrichtung auch im Bereich des vorderen Lagers bzw. der Wälzlagereinheit vorgesehen werden, die im Endbereich der Werkzeug- und/oder Werkstückaufnahme angeordnet ist. Beispielsweise kann eine derartige Kühlvorrichtung ein flüssiges Kühlmittel umfassen, sodass eine besonders vorteilhafte Kühlung der Werkzeugmaschineneinheit bzw. der Wälzlagereinheit realisierbar ist.

In einer vorteilhaften Ausführungsform der Erfindung bringt die Fluideinheit das mit Druck beaufschlagte Fluid zumindest im Betrieb bzw. während dem Drehen der Rotorwelle bzw. Rotoreinheit mit Hilfe der Einbringstelle in den Spalt ein. Gegebenenfalls kann das druckbeaufschlagte Fluid auch in einer Stillstandphase bzw. bei nichtdrehender Rotorwelle bzw. Rotoreinheit in den Spalt bzw. mittels der Einbringstelle eingebracht werden. Hierbei können beispielsweise im Betrieb eingedrungene Partikel wieder entfernt werden. Beispielsweise kann hier ein vergleichweise großer Druck vorgesehen werden. Das heißt, dass hierbei das Fluid mit einem besonders großen Druck beaufschlagt wird, der beispielsweise größer als im Betrieb ist. Das bedeutet, dass beispielsweise beim Stillstand bzw. bei stehender Rotorwelle/Rotoreinheit eine spezielle Reinigungsphase mit erhöhtem Druck realisiert ist. So kann beispielsweise ein vergleichsweise kleiner Druck im Betrieb bereits eine vorteilhafte wie z.B. eine im Wesentlichen kontinuierliche Strömung des Fluids im Spalt bewirken und das Eindringen von Verschmutzung bzw. feinen Partikeln oder dergleichen wirkungsvoll reduziert bzw. verhindern.

Vorteilhafterweise bildet das Fluid im Spalt bzw. zumindest im Bereich der Einbringstelle einen pneumatischen bzw. hydraulischen Schutzvorhang aus. Dieser im Spalt angeordnete Schutzvorhang stellt somit eine Barriere für eindringenden Schmutz dar und verhindert wirkungsvoll das Vordringen entsprechender Verschmutzungen bis zum vorderen Wälzlager bzw. der Wälzlagereinheit im Endbereich der Werkzeug- und/oder Werkstückaufnahme. Dies ist gerade während des Betriebs bei sich relativ zueinander bewegenden Einheiten, nämlich der Rotoreinheit/-welle und der statischen bzw. nicht bewegenden Statoreinheit, von besonderem Vorteil.

Beispielsweise kann auf materielle Dichtungen bzw. Barrieren Elastomerdichtungen oder dergleichen sowohl am Ende oder innerhalb des Spaltes vollständig verzichtet werden. Derartige materielle Abdichtungen werden im Betrieb stark erwärmt bzw. hohem Verschleiß und starken Beanspruchung ausgesetzt. Deshalb weisen diese eine ausgesprochen schlechte Haltbarkeit bzw. kurze Lebensdauer auf.

Dagegen unterliegt ein vorteilhafter Fluidvorhang bzw. Luftvorhang keinerlei Verschleiß und kann trotzdem eine vollständige Abdichtung des Spalts gerade während dem Betrieb realisieren, das heißt vor allem auch bei (schnell) drehender Rotorwelle bzw. Rotoreinheit.

In einer besonderen Weiterbildung der Erfindung ist ein erster Strömungswiderstand des Fluids zwischen der Einbringstelle und einer Austrittsstelle des Spaltes kleiner als ein zweiter Strömungswiderstand des Fluids zwischen der Einbringstelle des Fluids und der Wälzlagereinheit. Hierdurch wird in vorteilhafter Weise erreicht, dass das Fluid größtenteils in Richtung der Austrittstelle des Spaltes strömt und vorzugsweise ein kleinerer Teil des Fluids bzw. des Fluidstromes in Richtung Wälzlagereinheit strömt. Hierbei stellt die Austrittsstelle des Spaltes ein (äußeres) Ende des Spaltes dar, das dem anderen bzw. zweiten Ende des Spaltes bei der Wälzlagereinheit entgegengesetzt bzw. gegenüberliegend angeordnet ist. Das bedeutet, dass die Austrittsstelle des Spaltes gemäß dieser vorteilhaften Ausführungsform die Austrittsstelle zur Umgebung darstellt bzw. an einer äußeren Mantelfläche der Werkzeugmaschineneinheit bzw. an einer Oberfläche der Werkzeugmaschineneinheit angeordnet ist. Somit strömt beispielsweise die an der Einbringstelle eingebrachte Druckluft oder dergleichen zum größten Teil durch den Spalt zur umgebenden Umgebungsluft bzw. atmosphärischen Luft, sodass eindringende Partikel bzw. eindringende Verschmutzung in Bezug auf die Strömungsrichtung der Druckluft bzw. des Fluids zumindest bis zur Einbringstelle entgegengerichtet strömt. Dies führt zu einer weiteren Verbesserung der Schutzwirkung für das Wälzlager.

Vorzugsweise ist die Einbringstelle näher an einer Austrittsstelle des Spaltes angeordnet als an der Wälzlagereinheit bzw. ein erster Strömungsweg des Fluids zwischen der Einbringstelle und einer Austrittsstelle des Spaltes ist kleiner als ein zweiter Strömungsweg des Fluids zwischen der Einbringstelle des Fluids und der Wälzlagereinheit. Hiermit wird erreicht, dass selbst bei etwa gleichen Querschnittsverhältnissen bzw. Strömungsverhältnissen, wie z.B. Art und Weise sowie Anzahl von ggf. vorhandenen Umlenkungen, Strömungsradien etc., ein größerer Anteil des Fluids bzw. des Fluidstroms in Richtung Austrittsstelle des Spaltes bzw. nach außen aus der Werkzeugmaschineneinheit hinaus strömt. Denn durch den kürzeren ersten Strömungsweg wird der erste Strömungswiderstand bei ansonsten vergleichbaren bzw. ähnlichen Strömungsbedingungen kleiner als der zweite Strömungswiderstand und somit strömt das Fluid bzw. der Fluidstrom leichter in Richtung nach außen bzw. in Richtung der Austrittsstelle des Spaltes bzw. zur äußeren Oberfläche der Werkzeugmaschineneinheit als in Richtung Wälzlagereinheit.

Somit ist die Strömung des Fluids zu einem großen Teil bzw. größtenteils entgegen der Eindringrichtung von Verschmutzung wie vor allem feinen Partikeln oder dergleichen entgegengerichtet, sodass eine wirkungsvolle bzw. verbesserte Schutzwirkung vor Verschmutzung für das Wälzlager bzw. die Wälzlagereinheit generiert wird.

Vorzugsweise weist der erste und/oder zweite Strömungsweg keinen vollständig geraden Weg bzw. Verlauf auf, sondern in vorteilhafter Weise einen wenigstens einmal oder mehrfach gebogenen/abgewinkelten Strömungsweg auf. Vorteilhafterweise ist der Spalt als Dichtspalt bzw. Labyrinthdichtung ausgebildet. Eine entsprechende Labyrinthdichtung bzw. bevorzugt gebogene Strömungswege ermöglichen eine vorteilhafte Abdichtung des Spaltes durch das an der Anbringstelle eingebrachte bzw. einströmende Fluid. Hiermit wird eine nahezu vollkommene Dichtheit des Spaltes durch das druckbeaufschlagte Fluid zwischen den relativ zueinander bewegenden Komponenten (Rotoreinheit und Statoreinheit) realisierbar.

Gegebenenfalls kann das Fluid als Schmiermittel, insbesondere als Kühlschmiermittel ausgebildet werden. Hierdurch wird erreicht, dass beispielsweise zum Wälzlager bzw. zur Wälzlagereinheit strömendes Schmiermittel wie Schmieröl, Kühlschmiermittel oder dergleichen zu einer vorteilhaften Schmierung der Wälzlagereinheit führt, insbesondere während dem Betrieb bzw. bei rotierender Wälzlagereinheit.

Vorzugsweise ist das Fluid als Luft ausgebildet. Hierdurch wird erreicht, dass ausströmende Luft aus dem Spalt sowohl im Bereich der Wälzlagereinheit als auch im Bereich der Austrittsstelle bzw. beim Austritt der Luft aus der Werkzeugmaschineneinheit keine besondere Weiterleitung bzw. Beseitigung benötigt oder zu einer Verschmutzung bzw. Beeinträchtigung der Werkzeugmaschineneinheit führt. In den Spalt eingebrachte Druckluft strömt somit in vorteilhafter Weise durch die Werkzeugmaschineneinheit und vermischt sich dann mit der Umgebungsluft, sodass eine Weiterbehandlung erspart bleibt.

Gemäß der Erfindung ist wenigstens eine Verteilereinheit zum Verteilen des an der Einbringstelle eingebrachten Fluids vorgesehen. Hiermit wird ermöglicht, dass das eingebrachte Fluid nicht nur punktuell an einer oder mehreren, gegebenenfalls separaten Stellen in den im Allgemeinen ringförmigen Spalt eingebracht wird, sondern dass eine vorteilhafte, möglichst gleichmäßige Verteilung des eingebrachten bzw. eingeströmten Fluids über den gesamten Umfang bzw. über den gesamten Spalt verteilt wird. Somit wird ein wirkungsvoller Schutz vor eindringendem Schmutz bzw. feinen Partikeln oder dergleichen über den gesamten Umfang bzw. über den gesamten Spalt erreicht, sodass das Wälzlager bzw. die Wälzlagereinheit weitestgehend vor Schmutz und der damit verbundenen Beeinträchtigung der Wälzkörper oder der Wälzlagerringe geschützt wird.

Die Verteilereinheit ist als Ringeinheit zum Verteilen des Fluids im Wesentlichen um eine um die Drehachse angeordnete Umfangsfläche ausgebildet. So wird eine Verteilung des einströmenden bzw. eingebrachten Fluids über die gesamten 360° bzw. voll umfänglich um die Rotoreinheit bzw. die Rotorwelle erreicht.

Denkbar sind zahlreiche, gleichmäßig bzw. voneinander beabstandete Einbringstellen in Umfangsrichtung bzw. diese sind über den gesamten Spalt verteilt angeordnet. Gemäß der Erfindung sind zumindest teilweise über den Umfang verteilte/angeordnete Verteilerkanäle bzw. Verteilerelemente vorgesehen. Alternativ oder in Kombination hierzu können in vorteilhafter Weise quer zur Achsrichtung ausgerichtete Verteilerkanäle bzw. Verteilerelemente vorgesehen werden. Hiermit kann in vorteilhafter Weise durchgängig längs des gesamten Umfangs Fluid innerhalb des Spaltes verteilt wird.

In einer besonderen Weiterbildung der Erfindung umfasst die Verteilereinheit wenigstens eine Rändelung oder Riffelung und/oder weist in vorteilhafter Weise mehrere bzw. zahlreiche Rillen bzw. Nuten oder dergleichen auf, die beispielsweise in einem spitzen Winkel gegenüber der Drehachse bzw. Längsachse der Rotoreinheit bzw. Rotorwelle ausgerichtet sind. Vorzugsweise sind diese Rändelungen bzw. Riffelungen bzw. Rillen über die gesamte Umfangsfläche verteilt angeordnet. Vorteilhafterweise sind zahlreiche, im Wesentlichen parallel zueinander angeordnete und/oder in Richtung Drehachse ausgerichtete Rändelungen bzw. Riffelungen bzw. Rillen über die gesamte Umfangsfläche des Spaltes zumindest in einem in axialer Richtung ausgerichteten Abschnitt bzw. Teilbereich des Spaltes vorgesehen.

In einer vorteilhaften Variante der Erfindung umfasst die Verteilereinheit wenigstens eine in Längsrichtung bzw. Achsrichtung ausgerichtete Rändelung. Das bedeutet, dass eine Rändelung vorgesehen ist, die in vorteilhafter Weise parallele Rillen bzw. Nuten aufweist, wobei die Rändelung bzw. Rillen bzw. Nuten jeweils offene Enden aufweisen, die als Ausströmöffnung für das erfindungsgemäße Fluid ausgebildet sind.

Die in Umfangsrichtung nebeneinander angeordneten Ausströmöffnungen bzw. Rändelungsenden bilden einen nahezu geschlossenen Druckbereich bzw. Druckvorhang, der ein wirkungsvoller Schutz bzw. eine Sperre bildet. Dieser Druckbereich bzw. Druckvorhang erstreckt sich in vorteilhafter Weise über die gesamte Umfangsfläche, d.h. über 360°, und insbesondere bei den Ausströmöffnungen des ersten und/oder des zweiten Strömungsweges des Fluids, d.h. der Austrittsstelle des Spaltes und/oder des Spaltendes bei der Wälzlagereinheit.

Es hat sich in ersten Versuchen überraschenderweise gezeigt, dass durch eine vorteilhafte Rändelung gerade bei einem Einsatz von Luft bzw. Druckluft als Fluid Luftströmungen bzw. Verwirbelungen durch diese Rändelung, insbesondere einer in Längsrichtung bzw. Achsrichtung ausgerichteten Rändelungen, generiert wird, die eine besonders vorteilhafte Dichtung bzw. Ausbildung vorteilhafter Strömungshindernisse bzw. einer Ausbildung eines Luftvorhangs generiert. Hiermit wird ein besonders effektiver und sicherer Schutz der Wälzlagereinheit bzw. der vorderen Wälzlagerung generiert, wobei eindringende Verschmutzung bzw. eindringende feine Partikel oder dergleichen wirkungsvoll und sicher davor gehindert werden, das vordere Lager bzw. die Wälzlagereinheit zu beschädigen bzw. zu beeinträchtigen und zu zerstören.

Grundsätzlich kann die Verteilereinheit bzw. die Rändelung und/oder Riffelung durch spanende Verfahren wie Fräsen, Drehen oder dergleichen als auch durch Einprägen oder dergleichen, das heißt spanlos, wirtschaftlich vorteilhaft hergestellt werden.

Generell kann in vorteilhafter Weise einerseits Schmutz vor dem Eindringen wirkungsvoll ab-/zurückgehalten. Andererseits wird gegebenenfalls vorhandenes/verwendetes Schmiermittel der Wälzlagereinheit, wie z.B. Schmieröl oder dergleichen, wirkungsvoll vor einem Austritt aus dem Spalt bzw. aus der Austrittstelle ab-/zurückgehalten wird. So kann zum Einen die Wälzlagereinheit umfassend geschmiert und vorteilhaft betrieben werden. Zum Andern wird in vorteilhafter Weise ein Verschmutzen von z.B. schmutzsensiblen Werkstücken wie Komponenten von Prothesen, Herzschrittmachern oder dergleichen vor nachteiligen Verunreinigungen durch die Bearbeitung weitestgehend bzw. vollständig unterbunden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: einen schematischen Schnitt durch eine erste Ausführungsform gemäß der Erfindung und
- Figur 2: einen schematischen Schnitt durch eine zweite Ausführungsform gemäß der Erfindung.

In den Figuren ist eine Motorspindel 10 im Ausschnitt schematisch dargestellt, wobei es sich hierbei um einen Bereich der Motorspindel 10 handelt, der insbesondere einen Endbereich 11 eines Rotors 12 bzw. der eine nicht näher dargestellten Werkzeugaufnahme bzw. Werkstückaufnahme umfasst. In diesem zur nicht näher dargestellten Werkzeugaufnahme bzw. Werkstückaufnahme gerichteten Endbereich 11 ist ein Wälzlager 13 vorgesehen, das das zum Teil stark beanspruchte, sogenannte vordere Wälzlager 13 des Rotors 12 darstellt.

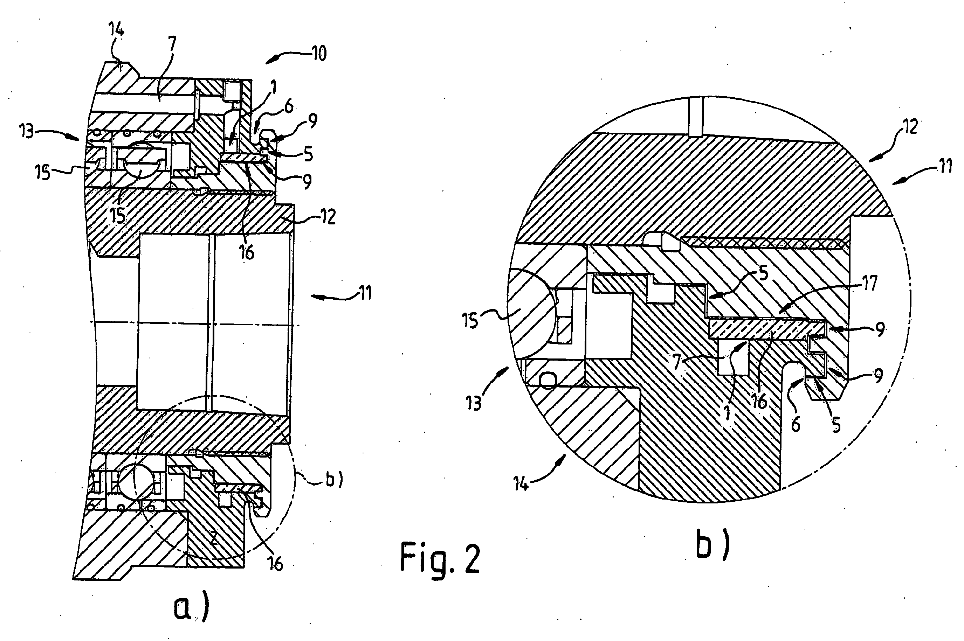

Das mechanische Wälzlager 13 ist zwischen dem Rotor 12 und dem Stator 14 angeordnet. Bei der Ausführungsform gemäß Figur 2 ist das vordere Wälzlager 13 als eine Lagerung mit zwei separaten Kugellagern ausgebildet. Diese können wie bereits vielfach bei Motorspindeln oder dergleichen im Einsatz in X- oder in O-Anordnung ausgeführt werden und sowohl axiale als auch radiale Kräfte aufnehmen.

Zwischen dem Wälzlager 13 und einer Austrittsstelle 6 ist ein Spalt 5 vorgesehen. Das bedeutet, dass zwischen dem Rotor 12 und dem Stator 13 ein Spalt 5 bzw. ein Abstand vorgesehen ist, der als kleiner Luftspalt zwischen den beiden Komponenten Rotor 12 und Stator 14 ausgebildet ist. In diesen Spalt 5 wird gemäß der Erfindung an einer Einbringstelle 1 ein Fluid, vorzugsweise Luft, eingebracht. Wie in Figur 2 näher dargestellt, wird diese Luft bzw. diese mit Druck beaufschlagte Druckluft von einem Druckerzeuger über einen Sammelkanal 7 zur Einbringstelle 1 des Spaltes 5 geleitet.

Der Spalt 5 erstreckt sich über den gesamten Umfang des Rotors 12 bzw. Stators 14, das heißt vollumfänglich um die nicht näher dargestellte Drehachse des Rotors 12.

Ein erster Strömungsweg 2 ist in vorteilhafter Weise kleiner als ein zweiter Strömungsweg 3 des Spaltes 5. Hierbei ist der erste Strömungsweg 2 zwischen der Einbringstelle 1 und der Austrittsstelle 6 angeordnet und der zweite Strömungsweg 3 zwischen der Einbringstelle 1 und dem Wälzlager 13. Durch den kürzeren Strömungsweg 2 wird erreicht, dass das eingebrachte Fluid bzw. die Luft zu einem größeren Teil durch den Strömungsweg 2 bzw. zur Austrittsstelle 6 strömt. Durch diese Strömung der Luft durch den Spalt 5, d.h. längs des ersten Strömungswegs 2 zur Austrittsstelle 6 hin, wird verhindert, dass im/während dem Betrieb zum Beispiel feine Partikel oder dergleichen nicht durch den Spalt 5 zum Wälzlager 13 vordringen können. Durch diese Gegenströmung der Druckluft während dem Betrieb der Motorspindel 10 wird wirkungsvoll ein Verschmutzen des Spaltes 12 bzw. ein Eindringen von Schmutz bis zum Wälzlager 13 und somit eine Beschädigung des mechanischen Wälzlagers 13 wirkungsvoll verhindert.

In vorteilhafter Weise ist bei der Ausführungsform gemäß Figur 2 eine Hülse 16 vorgesehen, die in einem Abschnitt 17 eine Riffelung bzw. Rändelung, insbesondere eine Links-Rechts-Rändelung aufweist. Hiermit wird erreicht, dass sich die durch den Spalt 5 bzw. längs des ersten Strömungswegs 2 hindurchströmende Druckluft gleichmäßig um den gesamten Umfang der Hülse 16 und somit um den gesamten Umfang des Spaltes 5 verteilt. Darüber hinaus wird hiermit eine vorteilhafte Verwirbelung und somit eine vorteilhafte Abdichtung des Spaltes 5 gegenüber eindringender Verschmutzung erreicht.

Die Hülse 16 kann beispielsweise aus einem vergleichsweise weichen Metall wie Messing oder dergleichen hergestellt werden. Messing oder dergleichen kann sehr gut bearbeitet werden, beispielsweise kann hier eine in Richtung Längs-/ Drehachse ausgerichtete Rändelung sehr kostengünstig und ohne großen Aufwand realisiert werden.

Alternativ zu einer axial bzw. längs ausgerichteten Rändelung könnten auch wenigstens teilweise radial ausgerichtete bzw. schräge Rillen/Nuten und/oder Bohrungen eine Verteilung des Fluids in den gesamten Spalt 5 ermöglichen. Allerdings sind derartige Bohrungen eine weniger kostengünstige Variante als die Rändelung.

Beispielsweise können über den Umfang verteilt nicht nur ein Sammelkanal 7 wie in Figur 2 dargestellt, sondern beispielsweise drei, um 120° um die Drehachse verteilt angeordnete bzw. versetzte Sammelkanäle 7 vorgesehen werden. Auch hiermit können vorteilhafte gleichmäßige und über den gesamten Umfang verteilte Strömungsverhältnisse generiert werden.

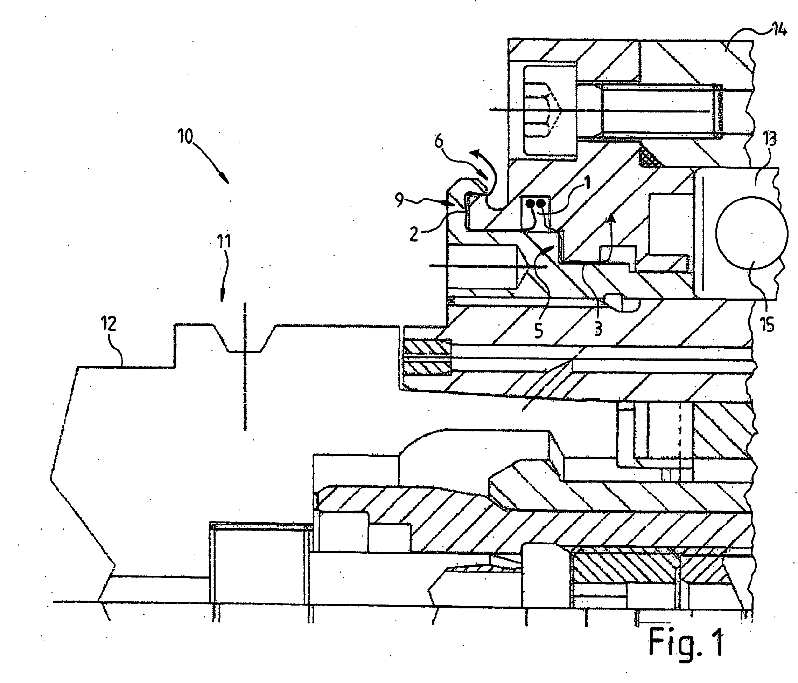

Darüber hinaus wird sowohl in Figur 1 als auch in Figur 2 deutlich, dass der erste Strömungsweg 2 im Abschnitt vor der Austrittsstelle 6 einen mehrfach gebogenen Verlauf aufweist. Hiermit wird erreicht, dass dieser Bereich 9 als Labyrinth-Dichtung ausgebildet wird. Eine derartig vorteilhafte Labyrinth-Dichtung führt zu einer weitestgehenden Abdichtung des Spaltes 5 gegenüber eindringender Verschmutzung. Zugleich ist eine derartige pneumatische Abdichtung des Spaltes 5 dadurch gekennzeichnet, dass diese im Vergleich mit einer Elastomerabdichtung oder dergleichen keinen Verschleiß aufweist.

Beispielsweise ist der erste Strömungsweg 2 ca. 8 mm lang und der zweite Strömungsweg 3 ca. 23 mm lang. Ein Verhältnis zwischen erstem und zweitem Strömungsweg von etwa 1 zu 3 ist verwirklicht. Es hat sich in der Praxis gezeigt, dass bei einem derartigen vorteilhaften Verhältnis eine wirkungsvolle Abdichtung bzw. Schutzwirkung generiert wird, um das vordere mechanische Wälzlager 13 vor Verschmutzung und somit vor Beschädigung zu schützen.

Gemäß der Erfindung wird das bislang häufiger beeinträchtigte bzw. beschädigte vordere mechanische Lager 13 wirkungsvoll vor Beeinträchtigungen geschützt, sodass im Vergleich zum Stand der Technik längere Laufzeiten der Wälzlager 13 erreicht werden. Dies führt zu einer wirtschaftlich günstigen Betriebsweise einer Werkzeugmaschineneinheit gemäß der Erfindung, was insbesondere bei modernen, schnell drehenden Motorspindeln 10, Drehtischen oder dergleichen von großem Vorteil ist.

Zugleich kann gemäß den in den Figuren dargestellten Ausführungsformen ein vergleichweise kleiner Hebel zwischen Wälzlager 13 und Werkzeugaufnahme bzw. Werkstückaufnahme realisiert werden, was zu vorteilhaften kleinen Drehmomenten führt, die auf das Wälzlager 13 einwirken. Hierdurch wird zusätzlich eine Beanspruchung und Beeinträchtigung des Wälzlagers 13 weiter reduziert.

### Bezugszeichenliste

- 1: Einbringstelle
- 2: Strömungsweg
- 3: Strömungsweg
- 5: Spalt
- 6: Austrittsstelle
- 7: Sammelkanal
- 9: Labyrinth-Dichtung
- 10: Motorspindel
- 11: Endbereich
- 12: Rotor
- 13: Wälzlager
- 14: Stator
- 15: Wälzkörper
- 16: Hülse
- 17: Rändelung

## Patentansprüche

1. Motorisch angetriebene Werkzeugmaschineneinheit wie ein Mehrachsendrehkopf, eine Motorspindel (10), ein Drehtisch oder dergleichen mit einer Statoreinheit (14) und einer wenigstens eine um eine Drehachse drehbare Rotorwelle aufweisende Rotoreinheit (12), wobei die Rotoreinheit (12) wenigstens eine Lagereinheit und eine im Endbereich (11) einer Werkzeug- und/oder Werkstückaufnahme angeordnete, mehrere Wälzkörper (15) aufweisende Wälzlagereinheit (13) zum Lagern der Rotorwelle in der Statoreinheit (14) umfasst, wobei der Endbereich (11) wenigstens einen Spalt (5) zwischen Rotoreinheit (12) und Statoreinheit (14) aufweist, wobei wenigstens eine Fluideinheit (2, 3, 7) vorgesehen ist, die ein mit Druck beaufschlagbares Fluid an wenigstens einer Einbringstelle (1) in den Spalt (5) des Endbereiches (11) einbringt, wobei wenigstens eine Verteilereinheit (16, 17) zum Verteilen des an der Einbringstelle (1) eingebrachten Fluids vorgesehen ist und wobei die Verteilereinheit (16, 17) als Ringeinheit (16) zum Verteilen des Fluids im Wesentlichen um eine um die Drehachse angeordnete Umfangsfläche ausgebildet ist, **dadurch gekennzeichnet, dass** zumindest teilweise über den Umfang verteilte/angeordnete Verteilerkanäle und/oder Verteilerelemente vorgesehen sind.

2. Werkzeugmaschineneinheit nach Anspruch 1, **dadurch gekennzeichnet, dass** die Fluideinheit (2, 3, 7) als Schutzvorrichtung (2, 3) zum Schutz der Wälzlagereinheit (13) vor Verschmutzung ausgebildet ist.

3. Werkzeugmaschineneinheit nach einem der vorgenannten Ansprüche, **dadurch gekennzeichnet, dass** die Fluideinheit (2, 3, 7) das mit Druck beaufschlagte Fluid zumindest im Betrieb bzw. während dem Drehen der Rotorwelle bzw. Rotoreinheit (12) an der Einbringstelle (1) einbringt.

4. Werkzeugmaschineneinheit nach einem der vorgenannten Ansprüche, **dadurch gekennzeichnet, dass** die Einbringstelle (1) näher an einer Austrittstelle (6) des Spaltes (5) angeordnet ist als an der Wälzlagereinheit (13).

5. Werkzeugmaschineneinheit nach einem der vorgenannten Ansprüche, **dadurch gekennzeichnet, dass** ein erster Strömungsweg (2) des Fluids zwischen der Einbringstelle (1) und einer Austrittstelle (6) des Spaltes (5) kleiner als ein zweiter Strömungsweg (3) des Fluids zwischen der Einbringstelle (1) des Fluids und der Wälzlagereinheit (13) ist.

6. Werkzeugmaschineneinheit nach einem der vorgenannten Ansprüche, **dadurch gekennzeichnet, dass** das Fluid als Luft ausgebildet ist.

7. Werkzeugmaschineneinheit nach einem der vorgenannten Ansprüche, **dadurch gekennzeichnet, dass** die Verteilereinheit (16, 17) wenigstens eine Rändelung (17) und/oder Riffelung umfasst.

8. Werkzeugmaschineneinheit nach einem der vorgenannten Ansprüche, **dadurch gekennzeichnet, dass** die Verteilereinheit (16, 17) als in Richtung Drehachse ausgerichtete Rändelung (17) ausgebildet ist.

## Claims

1. A motor-driven tool machine unit such as a multi-axis rotational head, a motor spindle (10), a rotary table or the like, having a stator assembly (14) and an at least one rotor assembly (12) having a rotar shaft rotatable about a rotation axis, wherein the rotor assembly (12) comprises at least one bearing unit and a rolling bearing unit (13) arranged in the end region (11) of a tool and/or workpiece holder, having several rolling elements (15) for supporting the rotor shaft in the stator (14), wherein the end portion (11) has at least one gap (5) between the rotor assembly (12) and stator (14), wherein at least one fluid unit (2, 3, 7) is provided, which introduces a pressurizable fluid at at least one injection point (1) into the gap (5) of the end region (11), wherein at least one distributor unit (16, 17) is provided for the distribution of the fluid introduced at the injection point (1) and wherein the distributor unit (16, 17) is designed as a ring unit (16) for the distribution of the fluid primarily around a peripheral surface arranged about the rotation axis, **characterized in that** distributor channels and/or distributor elements are provided distributed/arranged at least partially over the periphery.

2. A machine tool unit according to claim 1, **characterized in that** the fluid unit (2, 3, 7) is designed as a protective device (2, 3) to protect the rolling bearing unit (13) from contamination.

3. A machine tool unit according to one of the aforementioned claims, **characterized in** the fluid unit (2, 3, 7) introduces the pressurizable fluid at least during the operation or during the rotation of the rotor shaft or rotor assembly (12) at the injection point (1).

4. A machine tool unit according to one of the aforementioned claims, **characterized in that** the injection point (1) is arranged closer to a discharge point (6) of the gap (5) than to the rolling bearing unit (13).

5. A machine tool unit according to one of the aforementioned claims, **characterized in that** a first flow path (2) of the fluid between the injection point (1) and a discharge point (6) of the gap (5) is smaller than a second flow path (3) of the fluid between the injection point (1) of the fluid and the rolling bearing unit (13).

6. A machine tool unit according to one of the aforementioned claims, **characterized in that** the fluid is designed as air.

7. A machine tool unit according to one of the aforementioned claims, **characterized in that** the distributor unit (16, 17) comprises at least a knurling (17) and/or corrugation.

8. A machine tool unit according to one of the aforementioned claims, **characterized in that** the distributor unit (16, 17) is designed as a knurling (17) aligned in the direction of the rotation axis.

## Revendications

1. Unité de machine-outil actionnée par un moteur, telle qu'une machine à tête rotative multiaxiale, une broche à moteur (10), une platine rotative ou tout élément similaire, comportant une unité de stator (14) et une unité de rotor (12) comportant au moins un arbre pouvant tourner autour d'un axe de rotation, ladite unité de rotor (12) comprenant au moins une unité de palier et une unité de palier à roulements (13), disposée dans une zone d'extrémité (11) d'un porte-outil et/ou d'un porte-pièce, comportant plusieurs corps de roulement (15) et destinée à supporter l'arbre du rotor dans l'unité de stator (14), la zone d'extrémité (11) comportant au moins une fente (5) entre l'unité de rotor (12) et l'unité de stator (14), au moins une unité de fluide (2, 3, 7) étant prévue pour introduire dans la fente (5) de la zone d'extrémité (11), au niveau d'au moins une zone d'introduction (1), un fluide pouvant être sollicité en pression, au moins une unité de distribution (16, 17) étant prévue pour distribuer le fluide introduit au niveau de la zone d'introduction (1), et ladite unité de distribution (16, 17) étant réalisée sous la forme d'une unité annulaire (16) pour distribuer le fluide sensiblement autour d'une surface périphérique disposée autour de l'axe de rotation, **caractérisée en ce qu'**il est prévu des canaux de distribution et/ou des éléments de distribution répartis/disposés au moins en partie sur le pourtour.

2. Unité de machine-outil selon la revendication 1, **caractérisée en ce que** l'unité de fluide (2, 3, 7) est réalisée sous la forme d'un dispositif de protection (2, 3) destiné à protéger l'unité de palier à roulements (13) contre l'encrassement.

3. Unité de machine-outil selon l'une quelconque des revendications précédentes, **caractérisée en ce que** l'unité de fluide (2, 3, 7), au moins en cours de service ou pendant la rotation de l'arbre du rotor ou de l'unité de rotor (12), introduit le fluide sollicité en pression dans la zone d'introduction (1).

4. Unité de machine-outil selon l'une quelconque des revendications précédentes, **caractérisée en ce que** la zone d'introduction (1) est disposée plus près d'une zone de sortie (6) de la fente (5) que de l'unité de palier à roulements (13).

5. Unité de machine-outil selon l'une quelconque des revendications précédentes, **caractérisée en ce qu'**une première voie de circulation (2) du fluide entre la zone d'introduction (1) et une zone de sortie (6) de la fente (5) est plus petite qu'une deuxième voie de circulation (3) du fluide entre la zone d'introduction (1) du fluide et l'unité de palier à roulements (13).

6. Unité de machine-outil selon l'une quelconque des revendications précédentes, **caractérisée en ce que** le fluide est de l'air.

7. Unité de machine-outil selon l'une quelconque des revendications précédentes, **caractérisée en ce que** l'unité de distribution (16, 17) comporte au moins un moletage (17) et/ou cannelure.

8. Unité de machine-outil selon l'une quelconque des revendications précédentes, **caractérisée en ce que** l'unité de distribution (16, 17) est réalisée sous la forme d'un moletage (17) orienté dans le sens de l'axe de rotation.
